# EUROPEAN PATENT APPLICATION

(11) **EP 2 600 060 A1**
(43) Date of publication of application: **05.06.2013**
(21) Application number: 12194307.0
(22) Date of filing: 26.11.2012
(51) Int. Cl.: F23L 7/00, F23J 15/06, F23C 9/00

(54) **Hydrogen assisted oxy-fuel combustion**

(30) Priority: 30.11.2011 US 201113307646
(71) Applicant: General Electric Company, Schenectady, New York 12345 (US)
(72) Inventor: Elkady, Ahmed Mostafa, Niskayuna, NY New York 12309 (US); Idahosa, Uyigue Omoma, Niskayuna, NY New York 12309 (US)
(74) Representative: Cleary, Fidelma

(57) **Abstract**

System and methods for hydrogen assisted oxy-fuel combustion are provided. The system includes a combustor (14), an air separation unit (12), a fuel stream (22) source, and a condenser (16). The combustor (14) includes an oxygen input port (42), a fuel stream input port (44), a carbon dioxide input port (48), and an exhaust output port (46). The air separation unit (12) is in fluid communication with the combustor (14) via the oxygen input port (42) of the combustor (14). The fuel stream source (54) is in fluid communication with the combustor (14) via the fuel stream input port (44) and includes a fuel source and a hydrogen source. The condenser (16) is disposed to receive an exhaust from the combustor (14) via the exhaust output port (46) and to return an output stream to the combustor (14) via the carbon dioxide input port (48). The method includes combusting a fuel stream in a combustor in the presence of an oxidizer to generate an exhaust gas.

## Description

### BACKGROUND

The invention relates generally to systems and methods for oxy-fuel combustion. More particularly, the invention relates hydrogen assisted oxy-fuel combustion.

Exhaust streams generated by the combustion of fossil fuels in, for example, power generation systems, include nitrogen oxides (NOₓ) and carbon monoxide (CO) as byproducts during combustion. NOₓ and CO emissions from power plants utilizing fossil fuels are increasingly penalized by national and international regulations. With increasing costs for emitting NOₓ and CO, emission reduction is important for economical power generation.

One method of reducing NOₓ emissions is to remove NOₓ from the exhaust gas through selective catalytic reduction. A method for achieving near zero NOₓ, without the need for removal of NOₓ from the exhaust, is the oxy-fuel combustion process. In this method, pure oxygen (typically in combination with a secondary gas such as carbon dioxide) is used as the oxidizer, as opposed to using air, thereby resulting in a flue gas with negligible NOₓ emissions. In the oxy-fuel process, a lower exhaust CO emission may be produced when a combustion flame can be stabilized with the lowest possible oxygen (O₂) concentrations in the oxidizer. However, the reduction in oxy-fuel O₂ concentration below a certain level may lead to flame stability issues.

Therefore, there is a need for a system and method for power generation that ensures lower levels of NOx and CO emissions, along with maintaining flame stability.

### BRIEF DESCRIPTION

In one aspect, the invention resides in a method including combusting a fuel stream in a combustor in the presence of an oxidizer to generate an exhaust gas, condensing the exhaust gas to obtain an output stream that comprises at least 95% carbon dioxide by volume, and directing at least a portion of the output stream to the combustor. The fuel stream entering the combustor includes a primary fuel and hydrogen. The oxidizer includes oxygen and carbon dioxide and is substantially free of nitrogen.

In another aspect, the invention resides a system including a combustor, an air separation unit, a fuel stream source, and a condenser. The combustor includes an oxygen input port, a fuel stream input port, a carbon dioxide input port, and an exhaust output port. The air separation unit is in fluid communication with the combustor via the oxygen input port of the combustor. The fuel stream source is in fluid communication with the combustor via the fuel stream input port and includes a fuel source and a hydrogen source. The condenser is disposed to receive an exhaust from the combustor via the exhaust output port and to return an output stream to the combustor via the carbon dioxide input port.

In yet another aspect, the invention resides in a system including a combustor, an air separation unit, a hydrogen enrichment unit, a turbine, and a condenser. The combustor includes an oxygen input port, a fuel stream input port, a carbon dioxide input port, and an exhaust output port. The air separation unit is in fluid communication with the combustor via the oxygen input port of the combustor. The hydrogen enrichment unit is in fluid communication with the combustor via the fuel input port. The turbine is in communication with the combustor via the exhaust output port. The condenser is disposed downstream of the turbine to receive an exhaust from the turbine and to return an output stream to the combustor via the carbon dioxide input port.

### DRAWINGS

Embodiments of the present invention will now be described, by way of example only, with reference to the accompanying drawings in which:
FIG. 1 illustrates a system, according to one embodiment of the invention;
FIG. 2 illustrates an example of a hydrogen enrichment system, according to one embodiment of the invention;
FIG. 3 illustrates a system, according to one embodiment of the invention;
FIG. 4 illustrates a system, according to one embodiment of the invention; and
FIG. 5 illustrates the carbon monoxide reduction benefits from hydrogen enrichment of fuel, according to an embodiment of the invention.

### DETAILED DESCRIPTION

Embodiments of the present invention include oxy-fuel combustion using hydrogen enriched fuel.

In the following specification and the claims that follow, the singular forms "a", "an" and "the" include plural referents unless the context clearly dictates otherwise.

Oxy-fuel combustion in gas turbine applications is one of the main routes for zero NOₓ emissions combustion. Oxy-fuel combustion is an enabler for carbon dioxide (CO₂) capture and sequestration, and is an attractive technology for applications requiring CO₂ without oxygen contamination. In gas turbines that operate by way of an oxy-fuel process, a CO₂ separation unit is not needed, because the main component of combustion exhaust includes primarily CO₂, and water (H₂O). By condensing H₂O or using the exhaust stream in a heat recovery steam generation (HRSG) process, a high concentration stream of CO₂ is produced and may be used for CO₂ sequestration or other CO₂ applications.

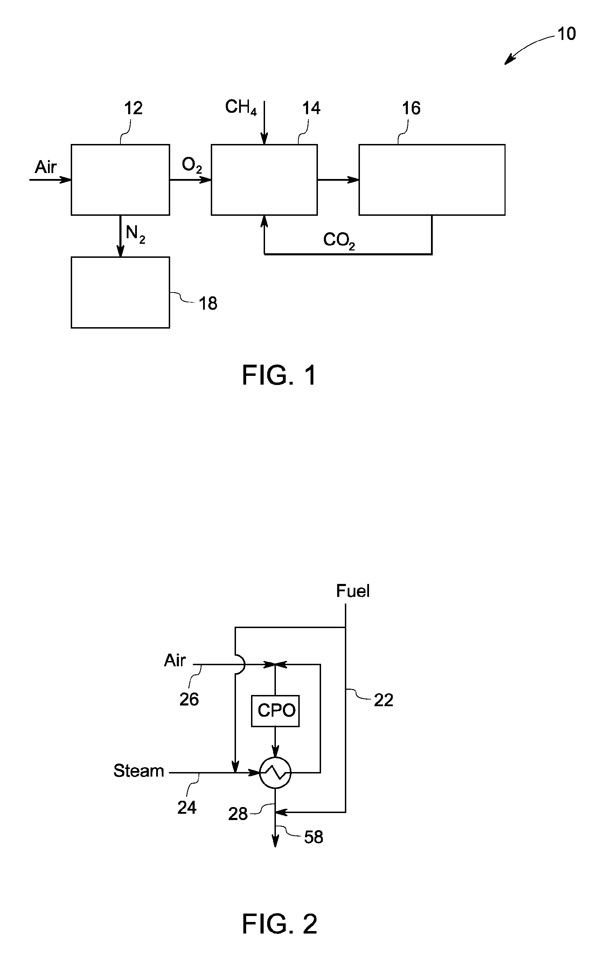

In general, a system 10 includes mainly an air separation unit (ASU) 12, a combustor 14, and a cooling system 16, as depicted in FIG. 1. The ASU 12 separates oxygen from air, providing a supply of oxygen as an oxidizer to the combustor 14. Those skilled in the art understand that other techniques for providing oxygen could be used, in place of the ASU. The combustor 14 is configured to burn a fuel stream in the presence of oxygen that is directed to the combustor 14, either separately or after mixing with CO₂. A fuel may be a hydrocarbon fuel. Non-limiting examples of fuel include heavy hydrocarbons, natural gas, methane, and ethanol. Nitrogen from the ASU 12 may be stored in a reservoir management unit 18 and/or used for other applications, such as, for example, recovering natural gas from gas fields. Products of combustion normally contain mainly CO₂, H₂O and trace emissions of CO and O₂. The cooling system 16 condenses H₂O, resulting in exhaust gases exceeding 95% CO₂ composition. In one embodiment, the efficiency of the oxy-fuel combustion process of FIG. 1 depends on the O₂ delivered by the ASU 12. An enhanced demand of oxygen from an ASU 12 may result in increasing process costs, due to the relatively expensive ASU 12 systems. Therefore, it will be of interest to determine a method for stable oxy-fuel combustion using a relatively low level of oxygen.

In one embodiment, a reduction of exhaust O₂ is desirable for applications that require a high-content CO₂ stream that is substantially free of oxygen. As used herein, a "high-content CO₂ stream" is defined as a stream having more than about 90% by volume of CO₂. In another embodiment, a high-content CO₂ stream contains more than about 95% by volume of CO₂. In a further embodiment, the high-content CO₂ stream contains more than about 99% by volume of CO₂.

A stream "substantially free of oxygen" may be defined as a stream containing less than about 1% by volume of oxygen. Based on equilibrium calculations and experimental work by the inventors, lower exhaust O₂ and CO emissions may occur when a combustion flame is stabilized with low O₂ concentrations in the oxidizer. One way of maintaining a lower oxygen concentration is by using a mixture of oxygen and CO₂ as an oxidizer. However, increasing CO₂ concentrations and lowering O₂ in the oxidizer below a certain level may reduce flame stability.

Previous equilibrium calculations and tests conducted by the inventors on combustion using methane (CH₄) as a fuel have indicated that oxidizer levels of at least about 30% O₂ by volume in the oxy-fuel combustion are desired to match flame temperatures for CH₄-air combustion.

Burning the fuel stream using substantially all of the oxygen of the oxidizer may significantly reduce the oxygen content in the exhaust gas. Thus, operating the combustion process close to a stoichiometric fuel-to-oxygen ratio (φ= 1), or with a slightly richer fuel, minimizes the O₂ content in the exhaust, enabling high CO₂ concentrations for downstream processes. In one embodiment, an oxygen level of less than 10 ppm in the CO₂ exhaust stream is desirable. One example of an application that typically specifies a high-content CO₂ stream is oil recovery from depleted oil recovery wells, where the CO₂ stream injection could lead to enhanced oil recovery.

A portion of the high CO₂ exhaust gases may also be recirculated to the combustor 14, for mixing with the separated O₂ from the ASU 12. Maintaining minimum CO emissions from the combustion helps in maintaining high combustion efficiency.

NOₓ production in combustion using an oxy-fuel is expected to be minimal, as nitrogen is present in very low concentrations in the oxygen supplied by the ASU. Experiments performed by the inventors showed that up to about 4% nitrogen in the oxidizer does not generate more than about 5 ppm of NOₓ. In one embodiment, the oxidizer used for the combustion is substantially free of nitrogen. The term "substantially free" as used herein means that the nitrogen in the oxidizer is in such low amounts as could be achieved by an air separation unit. In one embodiment, the nitrogen present in the oxidizer is less than about 1% by volume of the oxidizer.

The concept of a "stable flame" is generally known in the art. In the context of the present invention, a stable flame is one that does not extinguish due to lack of oxidizer, when the oxygen content ranges from about 20%-30% by volume in the oxidizer during operation of combustor, at a temperature within the range of about 2700°F (1482°C) - 3700°F (2038°C).

In the present application, the inventors disclose using hydrogen enrichment of the fuel in oxy-fuel combustion as an enabler for improved flame stability at lower O₂ concentrations of the oxidizer. As used herein, the term "hydrogen enrichment" means the increased amount of hydrogen in the fuel stream as compared to a primary fuel. For example, if the primary fuel is methane (CH₄), the hydrogen enrichment of the fuel stream will entail the inclusion of a quantity of hydrogen. The hydrogen present in the fuel stream may be in the form of hydrogen molecules or may be present as a part of the fuel mixture. In one embodiment, hydrogen exists as a component of the primary fuel. A primary fuel stream may be enriched with hydrogen supplied or produced using different methods. In on embodiment, hydrogen is stored separately and mixed with the primary fuel at a ratio before subjecting the fuel stream to combustion. Those skilled in the art understand that several methods exist for production of hydrogen, examples including steam reforming, water electrolysis, thermal partial oxidation and plasma reforming among others. In one embodiment, the hydrogen for enrichment of the fuel stream is provided by using catalytic partial oxidation (CPO).

An example catalytic partial oxidation process utilizing steam, air and natural gas (NG) is illustrated in FIG. 2. In this process, a part of the primary fuel 22 stream is mixed with steam 24 and reacted with air 26 to produce hydrogen 28. The partial oxidation reaction is a partial combustion of the air /steam and fuel mixture typically below the temperature of about 1800F. The partial oxidation reaction may or may not be carried out in the presence of a catalyst. If the partial oxidation is carried out without the involvement of any catalyst, the oxidation process to create hydrogen 28 is referred to as thermal partial oxidation (TPO). The use of catalysts such as noble metals/alloys including rhenium-cerium, rhenium-alumina or rhenium-ruthenium is found to enhance percentage volume production of hydrogen 28 as well as reduce the reaction temperature needed for hydrogen 28 productions. This hydrogen 28 is mixed with primary fuel 22 before feeding in to the system 10 as the fuel stream 58. Thus, the example CPO process detailed above utilizes a portion of the primary fuel to create the H₂ that is used for the enrichment of primary fuel 22. In one embodiment, the output stream (not shown) from the CPO process may contain trace percentages of primary fuel by volume. Those skilled in the art understand the variety of CPO systems applicable to H₂ generation and hydrogen enrichment of the primary fuel.

Hydrogen enrichment of the fuel stream in an oxy-fuel combustion process reduces oxygen content in the oxidizer that reacts with the primary fuel, at the same time improving (reducing) lean blow off (LBO) margin in the oxy-fuel combustion. The increased hydrogen content in the fuel stream enhances the reactivity of the fuel supply in the oxy-fuel combustion process. Hydrogen enrichment may further aid in bringing down the flame temperature of the oxy-fuel combustion. Specifically, hydrogen enrichment produces less carbon monoxide at lower temperatures by consuming oxygen molecules that would otherwise generate carbon monoxide (CO) particularly at lower flame temperatures. Thus, the hydrogen enrichment of the fuel stream may bring down the oxygen and carbon monoxide content in the exhaust gas, thus providing a "cleaner" carbon dioxide exhaust stream after condensing out water.

As noted above, hydrogen enrichment of the fuel stream aids in decreasing the temperature of the oxy-fuel combustion without undesirable increase in the emission contaminants such as CO and NOx. In one embodiment, the flame temperature of the oxy-fuel combustion using a hydrogen enriched fuel stream and CO₂+O₂ oxidizer stream is less than about 1650°C (3000°F). In one embodiment, the flame temperature is less than about 1600°C (2900°F). In a further embodiment, the flame temperature is less than about 1540°C (2800°F).

Compared to air combustion, the general fuel to oxidizer ratio may be higher in the oxy-fuel combustion. However, the addition of hydrogen in the fuel stream is found to aid in bringing down the useable fuel to oxidizer ratio in the oxy-fuel combustion. In one embodiment, the oxy-fuel combustion is performed at stoichiometric fuel to oxidizer ratio. In one embodiment of the present invention, the combusting of fuel stream is performed at or below an equivalence ratio of about 0.9. As used herein, an "equivalence ratio" is defined as the fuel/oxidizer volume ratio of the combustion to the stoichiometric fuel/oxidizer volume ratio. In one embodiment, the oxy-fuel combustion is performed on a hydrogen enriched fuel stream at or below an equivalence ratio of about 0.7. In one embodiment, the amount of oxygen present in the oxidizer is less than about 25% by volume relative to the total oxidizer.

In one embodiment, the amount of hydrogen along with the primary fuel is at least about 5% of the fuel stream by volume. In one embodiment, the hydrogen enrichment is at least about 10% by volume of the fuel stream. In one embodiment, the hydrogen enrichment in the fuel stream is about 15% by volume of the fuel stream.

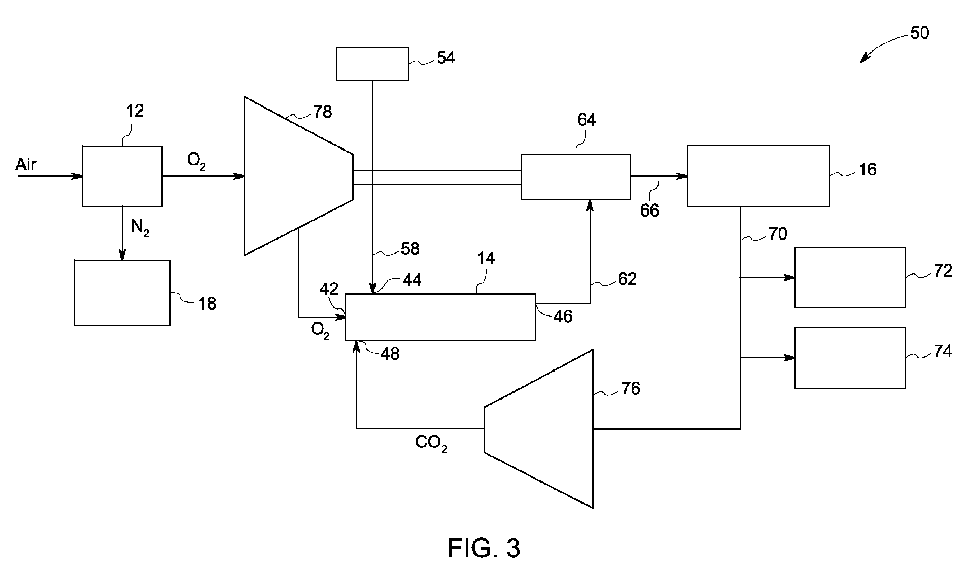

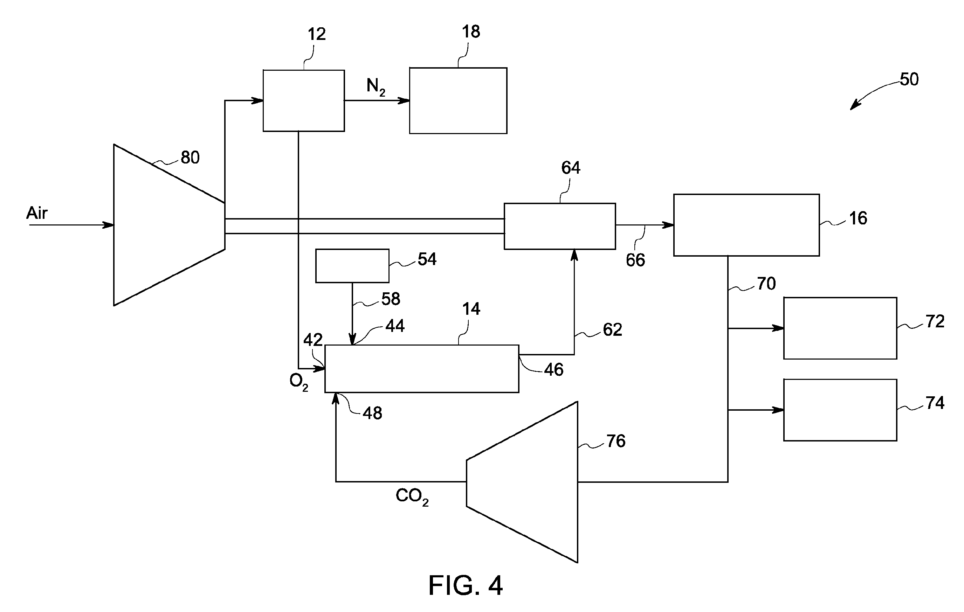

In one embodiment, a system 50 is provided, as shown in FIG. 3 and FIG. 4. The system 50 includes an ASU 12 providing oxygen output; a combustor 14 configured to receive oxygen through an oxygen input port 42 and to receive a fuel stream 58 through a fuel stream input port 44; a hydrogen enrichment unit 54 up stream of the combustor 14 that supplies the fuel stream 58 including a primary fuel and hydrogen into the combustor 14, so as to maintain a stable flame (not shown) generating an exhaust gas 62. Those skilled in the art understand that other techniques for providing oxygen could be used, in place of the ASU.

A cooling system 16 can be fluidly coupled to combustor 14 by receiving the exhaust gas 62 produced by the combustor 14. In one embodiment, the cooling system 16 is fluidly coupled to the combustor 14 through a turbine 64 downstream of the combustor 14. The turbine 64 may receive an output stream (exhaust gas) 62 from the combustor 14 through an exhaust output port 46, and use at least a part of the energy associated with the exhaust gas 62 to generate electricity, releasing a used-up exhaust stream 66. Exhaust stream 66 from the turbine 64 may be passed through the cooling system 16, such as, for example, a water condensation system or HRSG, to condense water from the exhaust stream 66, and to create a carbon dioxide stream 70. The carbon dioxide stream 70 may be partially or fully captured in a CO₂ capture system 72, and stored. An amine CO₂ unit is a non-limiting example of a CO₂ capture system. In another embodiment, the carbon dioxide stream 70 may be directed to applications that use high-content carbon dioxide, such as for example, an oil recovery system 74.

In one embodiment, at least a part of the carbon dioxide stream 70 is redirected to the combustor 14 through a carbon dioxide input port 48. The carbon dioxide stream may be optionally compressed in a CO₂ compressor 76, to be mixed with the oxygen in the combustor 14.

It is usually desirable to direct compressed oxygen to the combustor 14 to be mixed with fuel stream 58 to maintain a minimum pressure of the reactant stream to the combustors. The compressed oxygen may be obtained in different ways. A compressor may be used to compress a gas stream including air and /or oxygen. For example, in FIG. 3, the air is passed through the ASU 12, and separated oxygen is compressed through an oxygen compressor 78 situated downstream of the ASU, before being directed to the combustor 14. In another embodiment, as shown in FIG. 3, air is compressed in an air compressor 80, situated upstream of the ASU, before being supplied to an ASU 12. (The ASU used herein is usually one that is capable of separating compressed oxygen from compressed air). Alternatively, an oxygen compressor 78 (e.g., see FIG. 3) may be added downstream to the system explained in FIG. 4.

Terms "upstream" and "downstream" as used herein indicate the flow of contents. For example, "compressor upstream of ASU" implies that the contents of compressor passed "to" the ASU during operation and the "compressor downstream of ASU" implies that the contents of compressor were passed "from" the ASU during operation. While the terms "upstream" and "downstream" indicate a fluid communication between the indicated parts such as compressor and ASU in this example, they are by no means limiting the parts to be in direct fluid communication without any intervening parts in between, unless specifically mentioned so in the application.

In some embodiments, a method of generating energy in a power plant that includes a gas turbine is provided. The method includes operating an ASU 12 (FIG. 4) to separate oxygen from air, passing fuel to the combustor 14, providing compressed oxygen to the combustor 14 by using air compressor 80 and/ or oxygen compressor 78 (FIG. 3), and combusting the fuel stream 58 in the combustor 14, in the presence of oxidizer. In this manner, an exhaust gas 62 is generated, comprising carbon dioxide and water. The exhaust gas 62 of the combustor 14 may be used in operating the turbine 64, for example, to generate electricity. The exhaust stream 66 of the turbine 64 may be passed through a water condensation system 16 to separate water from the exhaust stream 66, and to produce a high-content carbon dioxide stream 70. The high-content carbon dioxide stream 70 is substantially free of oxygen, for safety considerations in those situations where the presence of oxygen is a not desirable. As explained above, the carbon dioxide stream 70 may be stored, directed to other applications, and / or compressed and fed back to the combustor 14, e.g., in combination with the compressed oxygen.

Initially, the flame inside the combustor 14 is usually stabilized with oxygen, and slowly, the carbon dioxide is introduced as an addition to the oxygen. Hydrogen enrichment is gradually introduced in to the fuel stream while the CO₂ flow rates are still relatively low. In this manner, the CO₂ concentration in the combustor 14 feed may be maintained at less than about 70 volume percent. Gradually the CO₂ level in the oxidizer is increased and adjusted to be at a level that is capable of extinguishing the flame. Correspondingly, the hydrogen enrichment of the fuel stream is adjusted to stabilize the flame at that particular CO₂ level. Thus, the CO₂ rate is increased to levels exceeding 70% of the volume of oxidizer present, and the hydrogen enrichment is correspondingly increased until a continuous operating hydrogen enrichment level is attained.

The "operating hydrogen enrichment level" is determined by the required flame temperature in the combustor 14. The oxygen percentage in the oxidizer at the required flame temperature provides a determination of the recirculated CO₂ volume flow rate to the combustor 14. By the application of hydrogen enrichment in the fuel stream, a stable flame may be maintained at a carbon dioxide level greater than about 70 volume percent. In other words, the flame may be stabilized inside the combustor 14 at an oxygen level less than about 30 volume percent of the oxidizer.

### EXAMPLE:

The following examples illustrate methods, materials and results, in accordance with specific embodiments, and as such should not be construed as imposing limitations upon the claims. All components are commercially available from common chemical suppliers, unless otherwise indicated.

The impact of H₂ enrichment on flame stability and the improvement of lean blow off (LBO) flame temperature were assessed using an 8" diameter test rig capable of withstanding pressure and temperatures of about 300 psia and 850F respectively. Fuel and air were premixed in a tube bundle, prior to their admission to the combustor and the flame was anchored using a flame stabilizer plate. A 5inch long, 2 inch diameter combustor was located downstream of the flame stabilizer. The preheated air used for combustor cooling was also utilized to preheat the fuel/air mixture outside the tube bundle. Combustion air was metered using a venturi and natural gas was metered using a coriolis type mass flow meter. Hydrogen was metered with a thermal mass flow meter/controller for accurate control of hydrogen flow. The air flow rate was around 0.05 lb/s. The inlet conditions were kept relatively constant at 178 - 185 psia and 550-600F. Hydrogen was added to the natural gas from 5% to 25% in 5% increments. Combustion products were sampled near iso-kinetic conditions using a water-cooled gas sampling probe that was placed 4.2 inches downstream of the flame stabilizer. A stream of the sample was then cooled, dried, and sent to gas sampling systems for CO₂, O₂, unburned hydrocarbons (UHC), and CO measurements.

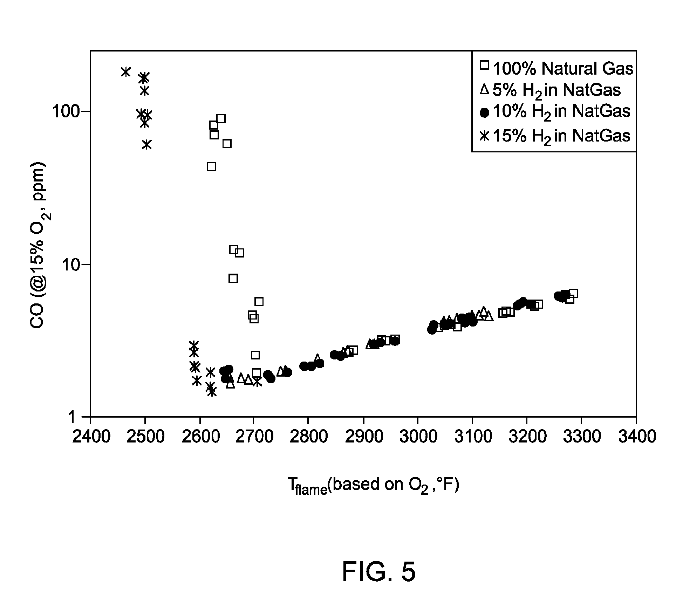

FIG. 5 illustrates the flame temperature and carbon monoxide reduction benefits from hydrogen enrichment at the lean blow off regime associated with lower flame temperatures, in accordance with one embodiment of the invention. The lowering of flame temperature and CO emission with respect to different levels such as 5%, 10%, and 15% hydrogen enrichment is illustrated in the graph.

Specifically, in the absence of H₂ enrichment (100% Natural Gas), a stable flame would be obtained only above a flame temperature of 2620F. With the addition of 15% hydrogen enrichment, the minimum flame temperature for stable flames is lowered to approximately 2500F. In this example, a 120F improvement in the stable flame regime is obtained for a 15% H₂ enrichment. In addition, very low (equilibrium) CO levels are obtained at lower temperatures with the introduction of H₂ enrichment.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A method comprising:
combusting a fuel stream (22) comprising a primary fuel and hydrogen in a combustor 14 in the presence of an oxidizer to generate an exhaust gas (62), wherein the oxidizer is substantially free of nitrogen and comprises oxygen and carbon dioxide;
condensing the exhaust gas (62) to obtain an output stream that comprises at least 95% carbon dioxide by volume; and
directing at least a portion of the output stream to the combustor.

2. The method of claim 1, wherein the exhaust gas (62) is substantially free of oxygen.

3. The method of claim 1 or 2, wherein the amount of hydrogen in the fuel stream (22) is at least about 5% of the fuel stream by volume.

4. The method of any of claims 1 to 3, wherein the combusting is performed at or below a stoichiometric ratio of fuel and oxidizer.

5. The method of claim 4, wherein the combusting is performed at or below an equivalence ratio of about 0.9.

6. The method of any of claims 1 to 5, wherein combusting comprises combusting the fuel stream at a flame temperature less than about 1650°C (3000°F).

7. The method of claim 6, wherein the amount of oxygen present in the oxidizer is less than about 25% by volume relative to total oxidizer.

8. The method of any preceding claim, further comprising directing at least a portion of the output stream to an enhanced oil recovery system (74).

9. The method of any preceding claim, further comprising compressing the at least a portion of the output stream prior to directing to the combustor (14).

10. The method of any preceding claim, further comprising the steps of compressing air or oxygen to form a compressed gas stream, and directing at least a portion of the compressed gas stream to an air separation unit (12).

11. A system (50) comprising:
a combustor (14) comprising an oxygen input port (42), a fuel stream input port (44), a carbon dioxide input port (48), and an exhaust output port (46);
an air separation unit (12) in fluid communication with the combustor (14) via the oxygen input port (42);
a fuel stream (58) source in fluid communication with the combustor (14) and comprising a fuel source and a hydrogen source; and
a condenser (16) disposed to receive an exhaust from the combustor via the exhaust output port (46) and to return an output stream to the combustor (14) via the carbon dioxide input port (48).

12. The system of claim 11, wherein the system (50) further comprises a compressor (80) in fluid communication with the air separation unit (12).

13. The system of claim 12, wherein the compressor (80) is disposed either upstream or downstream of the air separation unit (12).

14. The system of any of claims 11 to 13, further comprising a carbon dioxide compressor (76) disposed upstream of the carbon dioxide port (48).

15. The system of any of claims 11 to 14, further comprising a hydrogen enrichment unit (54) disposed upstream of fuel input port (44).
